# EUROPEAN PATENT SPECIFICATION

(11) **EP 3 822 506 B1**
(45) Date of publication and mention of the grant of the patent: **05.10.2022**
(21) Application number: 19833084.7
(22) Date of filing: 12.07.2019
(51) Int. Cl.: F16D 65/02, F16D 69/04, F16D 65/092

(54) **FLOATING TYPE BRAKE PAD**
SCHWIMMEND GELAGERTER BREMSBELAG
PLAQUETTE DE FREIN DE TYPE FLOTTANT

(30) Priority: 13.07.2018 CN 201810776657
(43) Date of publication of application: 19.05.2021
(73) Proprietor: Beijing Tianrendaohe New Material Co., Ltd., Beijing 102400 (CN)
(72) Inventor: WU, Peifang, Beijing 102400 (CN); SHIJIA, Cairang, Beijing 102400 (CN); HU, Chen, Beijing 102400 (CN); CAO, Jingwu, Beijing 102400 (CN); LONG, Bo, Beijing 102400 (CN)
(74) Representative: Schlich, George
(86) International application number: PCT/CN2019/095796
(87) International publication number: WO 2020/011252

(56) References cited:
- CN-A- 107 939 874
- CN-A- 107 939 874
- CN-A- 108 644 258
- CN-U- 207 064 525
- CN-U- 207 470 651
- CN-U- 207 514 118
- JP-A- 2012 117 656

## Description

### TECHNICAL FIELD

The present invention relates to the technical field of braking devices, and in particular relates to a floating type brake pad.

### BACKGROUND

Currently, a disc type brake structure is usually used in train brakes, which mainly comprises a brake disc and a floating type brake pad. In the above-mentioned brake structure, mutual friction between the brake disc and the floating type brake pad consumes the kinetic energy of the moving vehicle or equipment so as to stop the train. The braking effect, durability, and production cost of floating type brake pads are important indicators to evaluate the quality of a train brake.

In order to improve the braking effect of the floating type brake pad and be able to freely adjust the friction block to have an optimal working surface, CN107939874A discloses a floating type brake pad, as shown in Figure 4, comprising a backing plate 101; a plurality of friction blocks 102, which are floatably connected to the backing plate 101, wherein a gap is present between adjacent friction blocks 102; an anti-rotation rod 103 is disposed in the gap and fixedly connected to the backing plate 101 for limiting the friction block 102 in a rotation direction thereof. The anti-rotation rod 103 is an elastic element. The friction block 102 is provided with a connection rod 104, and the connection rod 104 integrates the friction block 102 and the backing plate 101 by means of a clamp spring 105. CN207514118 also discloses a similar floating type brake pad.

The friction block can be adjusted freely in a vertical direction to have a proper position by using the above floating type brake pad, so that the brake pad and the brake disc are closely fitted together to achieve an optimal working surface for braking, and the anti-rotation rod can prevent rotation of the friction block relative to the brake pad backing plate, thereby limiting the position of the friction block to ensure that the friction block is kept at the optimal braking working surface, and thus improving the braking effect and service life of the brake pad. However, when the friction block is subjected to the action of a braking friction force or affected by vehicle vibration, the friction block would undergo positional shift in the horizontal direction, and the friction block would lose the above-mentioned optimal braking working surface in the process of positional shift in the horizontal direction, which may even cause the connection rod to collide with the backing plate, leading to that the connection rod deforms or even breaks under a large shear force, which seriously adversely affects the braking effect and service life of the floating type brake pad.

### SUMMARY OF THE INVENTION

Therefore, the technical problem to be solved by the present invention is to overcome the problem that, when subjected to the action of a braking friction force or affected by vehicle vibration, a floating type brake pad of prior art undergoes serious positional shift in the horizontal direction, whereby the friction body loses an optimal braking working surface and the braking effect is adversely affected, which may even cause the connection member connecting the brake pad backing plate and the friction body to deform or even break under a shear force, which seriously reduces the braking effect and service life of the floating type brake pad; and for this, the present invention provides a floating type brake pad, comprising:
a brake pad backing plate, formed with a countersunk face and a positioning hole;
a friction body, comprising a friction part and a positioning part inserted into the positioning hole, wherein a first relative gap is present between the positioning part and the positioning hole;
a connection member, respectively connected with the friction body and the brake pad backing plate such that the friction body is arranged on the brake pad backing plate with a certain floatable amount; and
an elastic supporting member, mounted within the countersunk face, connected with the friction body, and provided with a guide hole adapted to allow the positioning part to pass through,
wherein an outer contour edge of the elastic supporting member abuts against an inner side wall of the countersunk face, or a second relative gap smaller than the first relative gap is present between the outer contour edge of the elastic supporting member and the inner side wall of the countersunk face.

The brake pad backing plate is provided with an anti-rotation member for limiting the friction body in a rotation direction thereof, and a third relative gap smaller than the first relative gap is present between the anti-rotation member and the friction part.

The third relative gap can be larger than the second relative gap.

The anti-rotation member can be an elastic element sleeved with a compression bushing on an exterior thereof, a compression gap is reserved between the anti-rotation member and the compression bushing, and the compression bushing is configured to exert a biasing force on the friction part to prevent relative rotation between the friction part and the brake pad backing plate, and a fourth relative gap smaller than the first relative gap is present between the compression bushing and the friction part.

The fourth relative gap can be larger than the second relative gap.

The compression bushing can have a hardness value less than that of the anti-rotation member.

The anti-rotation member can have a hardness value greater than that of the elastic supporting member.

Optionally, the positioning part has a cylindrical structure extending from the friction part into the positioning hole, and the positioning hole is a circular through hole matching a shape of the positioning part.

Optionally, the positioning part comprises an annular groove in an end portion thereof on a side towards the brake pad backing plate, and the connection member is a clamp spring which is snap-fitted in the annular groove and abuts against a receiving groove in a back face of the brake pad backing plate opposite to the friction body. Optionally, the friction body comprises a spherical supporting part arranged on a side towards the brake pad backing plate, and the elastic supporting member has a sheet structure that is connected to and cooperating with the spherical supporting part.

The technical solution of the present invention has the following advantages:
1. The floating type brake pad provided by the present invention comprises an elastic supporting member that exerts a first biasing force onto the friction body in a direction away from the brake pad backing plate and exerts a second biasing force onto the friction body to prevent rotation of the friction body relative to the brake pad backing plate in a horizontal direction. A first relative gap is present between the positioning part of the friction body and the positioning hole of the brake pad backing plate, and a second relative gap is present between the outer contour edge of the elastic supporting member and the inner side wall of the countersunk face, the first relative gap has a gap distance larger than that of the second relative gap; or the elastic supporting member abuts against and is connected with an inner side wall of the countersunk face. When the friction body is subjected to the action of a braking friction force or affected by vehicle vibration and tends to undergo positional shift in the horizontal direction of the brake pad backing plate, the elastic supporting member connected with the friction body would beforehand come into contact with the inner side wall of the countersunk face, and then the elastic supporting member elastically deforms so as to prevent horizontal positional shift of the friction body and keep the floating type brake pad at the optimal braking working surface to improve the braking effect, whereby further positional shift of the friction body is prevented and collision of the positioning part with the inner wall of the positioning hole in the brake pad backing plate is avoided, so that the positioning part is prevented from deforming or even breaking due to the shear force, and the problem of the braking effect and service life of the floating type brake pad being reduced is solved.
2. In the floating type brake pad provided by the present invention, the brake pad backing plate is provided with an anti-rotation member for limiting the position of the friction body. A third relative gap is present between the anti-rotation member and the friction part, and the third relative gap has a gap distance larger than that of the first relative gap. When the friction body is subjected to the action of a braking friction force or affected by vehicle vibration and tends to undergo positional shift in the horizontal direction of the brake pad backing plate, the anti-rotation member disposed on the brake pad backing plate would beforehand come into contact with the friction body so as to prevent horizontal positional shift of the friction body and keep the floating type brake pad at a relatively good braking working surface to improve the braking effect, whereby further positional shift of the friction body is prevented and collision of the positioning part with the inner wall of the positioning hole in the brake pad backing plate is avoided, so that the positioning part is prevented from deforming or even breaking due to the shear force, and the problem of the braking effect and service life of the floating type brake pad being reduced is solved.
3. In the floating type brake pad provided by the present invention, the gap distance of the third relative gap between the anti-rotation member and the friction part is larger than that of the second relative gap between the elastic supporting member part and the inner side wall of the countersunk face, and because the third relative gap is designed to be larger than the second relative gap, when the friction body is subj ected to the action of a braking friction force or affected by vehicle vibration and tends to undergo positional shift in the horizontal direction of the brake pad backing plate, the elastic supporting member connected with the friction body would firstly come into contact with the inner side wall of the countersunk face so as to elastically deform to prevent horizontal positional shift of the friction body. If the elastic supporting member is not sufficient to stop further positional shift of the friction body in the horizontal direction, the friction body will then come into contact with the anti-rotation member, so that the anti-rotation member further prevents positional shift of the friction body in the horizontal direction. Therefore, the elastic supporting member and the anti-rotation member work in sequence to stop positional shift of the friction body, wherein the elastic supporting member limits the shifting position of the friction body to keep the floating type brake pad at an optimal braking working surface to improve the braking effect, and the anti-rotation member further limits the shifting position of the friction body to keep the floating type brake pad at a relatively good braking working surface to the greatest extent, whereby further positional shift of the friction body is prevented and collision of the positioning part with the inner wall of the positioning hole in the brake pad backing plate is avoided, so that the positioning part is prevented from deforming or even breaking due to the shear force, and the problem of the braking effect and service life of the floating type brake pad being reduced is solved.
4. In the floating type brake pad provided by the present invention, by providing the compression bushing sleeving on an exterior of the elastic element of the anti-rotation member, the compression bushing can beforehand buffer the impact brought by horizontal sliding and rotation of the friction body before the anti-rotation member takes effect, such that, before the anti-rotation member takes effect, the compression bushing works together with the elastic supporting member to prevent the floating type brake pad from deviating from a relatively good braking working surface, thereby improving the braking effect of the brake pad.
5. In the floating type brake pad provided by the present invention, the fourth relative gap between the compression bushing and the friction part is designed to be larger than the second relative gap between the elastic supporting member and the inner side wall of the countersunk face, so that, for the floating type brake pad, when the friction body tends to undergo positional shift, the elastic supporting member, the compression bushing and the anti-rotation member can cooperate and work in sequence to stop positional shift of the friction body, thereby further improving the capability of the brake pad to prevent deviating from a relatively good braking working surface and damaging the positioning part of the brake pad. In addition, before the friction body contacts the anti-rotation member, the elastic supporting member and the compression bushing can work together to effectively prevent positional shift of the friction body successfully before the friction body loses the optimal braking working surface.
6. In the floating type brake pad provided by the present invention, by setting the hardness value of the compression bushing to be smaller than the hardness value of the anti-rotation member, before the friction body contacts the anti-rotation member, at the same time of the elastic supporting member working together with the compression bushing to effectively prevent positional shift of the friction body successfully before the friction body loses the optimal braking working surface, deformation of the friction body due to an excessively high hardness value of the compression bushing can be prevented, so that the problem of the braking capability of the floating type brake pad being reduced due to deformation of the friction body would not happen. By the interchange of compression bushings with different hardnesses, the friction body can be kept at the optimal braking working surface simply and effectively to the greatest extent without deformation of the friction body.
7. In the floating type brake pad provided by the present invention, by setting the hardness value of the anti-rotation member to be greater than the hardness value of the elastic supporting member, the capability of the floating type brake pad to prevent horizontal positional shift of the friction body is increased in a stepwise manner, wherein the elastic supporting member limits the friction body preliminarily to keep it at the optimal working surface, and the anti-rotation element prevents further positional shift of the friction body and thereby eliminating the problem of the positioning part deforming or even breaking due to the shear force. The elastic supporting member is to ensure an optimal braking effect, the anti-rotation member is to avoid damage of the brake pad at the same time of ensuring a relatively good braking effect. The above two items work together to make the floating type brake pad achieve an optimal braking effect while ensuring that the floating type brake pad itself is not damaged.
8. In the floating type brake pad provided by the present invention, the friction body is floatably connected to the brake pad backing plate by a clamp spring. The clamp spring has the advantages of good floatable effect and convenience for installation and use.
9. In the floating type brake pad provided by the present invention, a spherical supporting part is arranged on a side of friction body towards the brake pad backing plate, and the elastic supporting member is set to have a sheet structure adapted to cooperate with the spherical supporting part, thereby preventing any stress concentration between the friction body and the elastic supporting member which would damage the brake pad, and in turn keeping the floating type brake pad in an optimal working condition and improving the braking capability and service life of the brake pad.

### BRIEF DESCRIPTION OF THE DRAWINGS

In order to illustrate the technical solutions of the specific embodiments of the present invention or in the prior art more clearly, hereinafter, the appended drawings that needs to be used in the description of the specific embodiments or the prior art will be briefly introduced. Apparently, the appended drawings described below only represent some embodiments of the present invention, and a person skilled in the art can obtain other drawings on the basis of these drawings without expenditure of creative efforts.
Figure 1 is a schematic structural view of a floating type brake pad with a compression bushing provided by the present invention.
Figure 2 is a schematic structural view of another floating type brake pad provided by the present invention.
Figure 3 is a schematic structural view of the floating type brake pad of Figure 1 undergoing positional shift in a horizontal direction.
Figure 4 is a schematic structural view of a floating type brake pad in the prior art.

Reference numerals:
1. brake pad backing plate; 2. countersunk face; 3. positioning hole; 4. friction body; 5. friction part; 6. positioning part; 7. first relative gap; 8. connection member; 9. elastic supporting member; 10. second relative gap; 11. anti-rotation member; 12. third relative gap; 13. compression bushing; 14. fourth relative gap; 15. annular groove; 16. spherical supporting part; 101. backing plate; 102. friction block; 103. anti-rotation rod; 104. connection rod; 105. clamp spring.

### DETAILED DESCRIPTION

Hereinafter, the technical solutions of the present invention will be described clearly and completely with reference to the appended drawings. Apparently, the described embodiments only represent part of but not all of the embodiments of the present invention. Based on the described embodiments of the present invention, all other embodiments obtainable by a person skilled in the art without making creative efforts fall within the protection scope of the present invention.

In the description of present invention, it should be noted that, the terms "center", "upper", "lower", "left", "right", "vertical", "horizontal", "inner", "outer", etc. refer to orientation or positional relationship that is based on the orientation or positional relationship shown in the drawings, which is only for facilitating describing the present invention and simplifying the description, and does not indicate or imply that the device or element referred to must have a specific orientation or must be configured or operated in a specific orientation, so these terms should not be construed as a limitation to the present invention. In addition, the terms "first", "second", and "third" are only used for descriptive purposes, and cannot be understood as indicating or implying relative importance thereof.

In the description of present invention, it should be noted that, unless specifically defined or restricted otherwise, the terms "mount", "interconnect", "connect" should be interpreted broadly. For example, it can be a fixed connection, a detachable connection or an integral connection; it can be a mechanical connection or an electrical connection; it can be a direct connection or an indirect connection through an intermediate medium, or it can be an internal communication between two components. For a person skilled in the art, the specific meanings of the above-mentioned terms in the present invention can be understood according to specific circumstances thereof.

In addition, the technical features involved in different embodiments of the present invention described below can be combined with each other as long as they do not conflict with each other.

### Embodiment 1

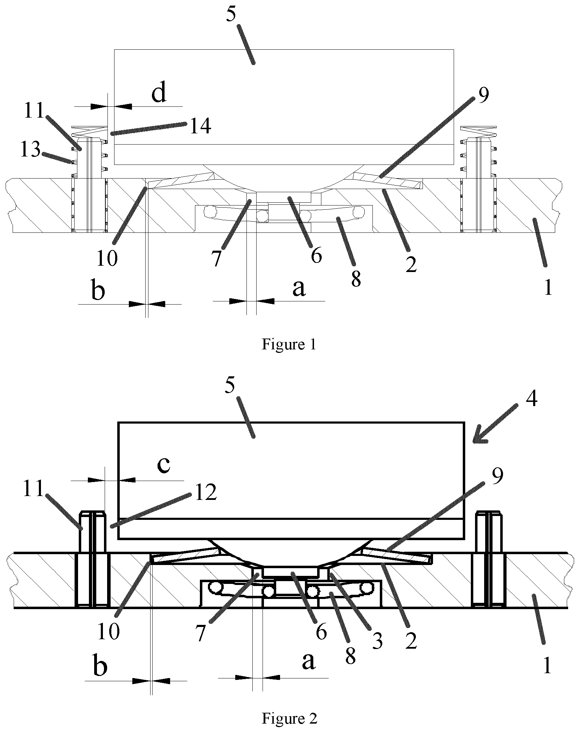

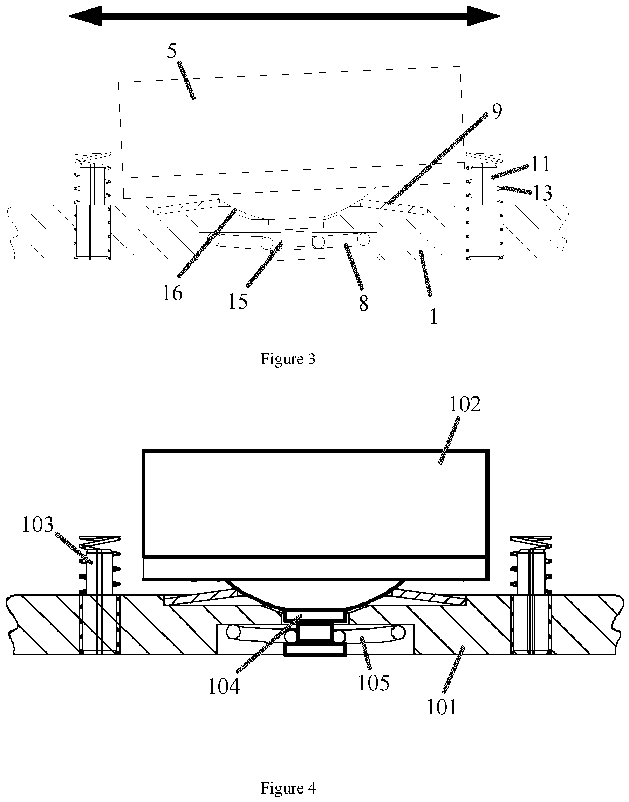

In Embodiment 1, as shown in Figure 1 and Figure 3, a floating type brake pad is provided, which comprises a brake pad backing plate 1, a friction body 4, an elastic supporting member 9 and an anti-rotation member 11.

The brake pad backing plate 1 has a structure with a horse-shoe shape, and is formed with a countersunk face 2 having a circular structure and a positioning hole 3 having a cylindrical structure.

The friction body 4 comprises a friction part 5, a positioning part 6 inserted into the positioning hole 3, and a spherical supporting part 16 arranged between the friction part 5 and the positioning part 6 and on a side towards the brake pad backing plate 1. The position part 6 is a cylindrical structure that extends from the friction portion 5 into the positioning hole 3 and matches the positioning hole 3, and there is a first relative gap 7 with a relative distance (a) between the position part 6 and the positioning hole 3.

The elastic supporting member 9 has a disc-shaped sheet structure connected to and cooperating with the spherical supporting part 16, and the elastic supporting member 9 is mounted within the countersunk face 2 and connected with the friction body 4, and the elastic supporting member 9 is provided with a guide hole adapted to allow the position part 6 to pass through. There is a second relative gap 10 with a relative distance (b) between the outer contour edge of the elastic supporting member 9 and the inner side wall of the countersunk face 2.

The anti-rotation member 11 has a column structure, which is made of spring stainless steel and is arranged on the brake pad backing plate 1 so as to limit the friction body 4 in a rotation direction thereof and also to limit positional shift of the friction body 4 in a horizontal direction. The anti-rotation member 11 is an elastic element, sleeved with a compression bushing 13, made of spring stainless steel and having a hardness less than that of the anti-rotation member 11, on an exterior thereof. There is a compression gap reserved between the anti-rotation member 11 and the compression bushing 13, and the compression bushing 13 limits rotation and horizontal shift of the friction part 5 before the anti-rotation member 11 performs a limiting effect, and there is a fourth relative gap 14 with a relative distance (d) between the compression bushing 13 and the friction part 5.

The distance (a) of the first relative gap 7 is greater than the distance (d) of the fourth relative gap 14, and the distance (d) of the fourth relative gap 14 is greater than the distance (b) of the second relative gap 10, and the hardness value of the compression bushing 13 is less than the hardness value of the anti-rotation member 11, and the hardness value of the anti-rotation member 11 is greater than the hardness value of the elastic supporting member 9. As shown in Figure 3, when the friction body is subjected to the action of a braking friction force or affected by vehicle vibration and tends to undergo positional shift in the horizontal direction of the brake pad backing plate, the elastic supporting member connected with the friction body would beforehand come into contact with the inner side wall of the countersunk face, and the elastic supporting member undergoes elastic deformation to prevent positional shift of the friction body in the horizontal direction and keep the floating type brake pad at an optimal braking working surface to improve the braking effect. If the elastic supporting member is not sufficient to stop further positional shift of the friction body in the horizontal direction, the friction body will contact the compression bushing, and the compression bushing can beforehand buffer the impact brought by horizontal sliding and rotation of the friction body before the anti-rotation member takes effect, such that, before the anti-rotation member takes effect, the compression bushing works together with the elastic supporting member to prevent the floating type brake pad from deviating from a relatively good braking working surface, thereby preventing further positional shift of the friction body as far as possible at the same time of ensuring the braking effect of the brake pad. However, if the compression bushing is still not sufficient to stop further positional shift of the friction body in the horizontal direction, the anti-rotation member will then become abutting against the friction body to prevent further positional shift of the friction body, whereby the positioning part of the column structure is prevented from colliding with the inner wall of the positioning hole in the brake pad backing plate, so that the positioning part is prevented from deforming or even breaking due to the shear force, and the problem of the floating type brake pad becoming damaged thereby is solved. In addition, in the present application, the hardness value of the compression bushing 13 is designed to be less than the hardness value of the anti-rotation member 11, and the hardness value of the anti-rotation member 11 is designed to be greater than the hardness value of the elastic supporting member 9, so that the capability of the floating type brake pad to prevent horizontal positional shift of the friction body is increased in a stepwise manner, wherein the elastic supporting member is used to ensure an optimal braking effect, the compression bushing makes the friction body have a relatively good braking effect, and the anti-rotation member is used to ensure that the floating type brake pad itself is not damaged. The above three items together to make the floating type brake pad achieve an optimal braking effect at the same time of ensuring that the floating type brake pad itself is not damaged, thereby improving the braking capability of the brake pad.

The floating type brake pad further comprises a connection member 8 which is a clamp spring having a ring structure, and the cylindrical positioning part 6 has an annular groove 15 in an end portion thereof on a side towards the brake pad backing plate 1, and an inner ring of the clamp spring is snap-fitted in the annular groove 15 and the outer side of the clamp spring abuts against a receiving groove in a back face of the brake pad backing plate 1 opposite to the friction body 4, such that the friction body 4 is arranged on the brake pad backing plate 1 with a certain floatable amount.

Certainly, the present invention application does not specifically limit the hardness and materials of the elastic supporting member 9, the compression bushing 13 and the anti-rotation member 11. In other embodiments, the compression bushing 13 can be replaced with a structure having the same hardness value as that of the anti-rotation member 11, thereby increasing the capability of preventing shift or rotation of the friction body 4.

### Embodiment 2

Embodiment 1 differs from Embodiment 2 in that the outer contour edge of the elastic supporting member 9 abuts against the inner side wall of the countersunk face 2, meaning that the second relative gap 10 has a distance (b) of 0, and the distance (a) of the first relative gap 7 is greater than the distance (d) of the fourth relative gap 14.

### Embodiment 3

Embodiment 3 differs from Embodiment 1 in that, as shown in Figure 2, the anti-rotation member 11 has a column structure, which is made of spring stainless steel and is arranged on the brake pad backing plate 1 so as to limit the friction body 4 in a rotation direction thereof and also to limit positional shift of the friction body 4 in a horizontal direction. There is a third relative gap 12 with a relative distance (c) between the anti-rotation member 11 and the friction part 5; the distance (a) of the first relative gap 7 is greater than the distance (c) of the third relative gap 12, and the distance (c) of the third relative gap 12 is greater than the distance (b) of the second relative gap 10, and the hardness value of the anti-rotation member 11 is greater than the hardness value of the elastic supporting member 9. When the friction body is subjected to the action of a braking friction force or affected by vehicle vibration and tends to undergo positional shift in the horizontal direction of the brake pad backing plate, the elastic supporting member connected with the friction body would beforehand come into contact with the inner side wall of the countersunk face, and the elastic supporting member undergoes elastic deformation to prevent positional shift of the friction body in the horizontal direction and keep the floating type brake pad at an optimal braking working surface to improve the braking effect. If the elastic supporting member is not sufficient to stop further positional shift of the friction body in the horizontal direction, the anti-rotation member will then become abutting against the friction body to prevent further positional shift of the friction body, whereby the positioning part of the column structure is prevented from colliding with the inner wall of the positioning hole in the brake pad backing plate, so that the positioning part is prevented from deforming or even breaking due to the shear force, and the problem of the floating type brake pad becoming damaged thereby is solved. In addition, in the present invention, the hardness value of the anti-rotation member 11 is designed to be greater than the hardness value of the elastic supporting member 9, so that the capability of the floating type brake pad to prevent horizontal positional shift of the friction body is increased in a stepwise manner, wherein the elastic supporting member is used to ensure an optimal braking effect, and the anti-rotation member is used to ensure that the floating type brake pad itself is not damaged. The above two items work together to make the floating type brake pad achieve an optimal braking effect at the same time of ensuring that the floating type brake pad itself is not damaged, thereby improving the braking capability of the brake pad.

## Claims

1. A floating type brake pad, comprising:
a brake pad backing plate (1), formed with a countersunk face (2) and a positioning hole (3);
a friction body (4), comprising a friction part (5) and a positioning part (6) inserted into the positioning hole (3), wherein a first relative gap (7) is present between the positioning part (6) and the positioning hole (3);
a connection member (8), respectively connected with the friction body (4) and the brake pad backing plate (1) such that the friction body (4) is arranged on the brake pad backing plate (1) with a certain floatable amount; and
an elastic supporting member (9), mounted within the countersunk face (2), connected with the friction body (4), and provided with a guide hole adapted to allow the positioning part (6) to pass through,
wherein an outer contour edge of the elastic supporting member (9) abuts against an inner side wall of the countersunk face (2), or a second relative gap (10) smaller than the first relative gap (7) is present between the outer contour edge of the elastic supporting member (9) and the inner side wall of the countersunk face (2),
the brake pad backing plate (1) is provided with an anti-rotation member (11) for limiting the friction body (4) in a rotation direction thereof,
**characterized in that**,
a third relative gap (12) smaller than the first relative gap (7) is present between the anti-rotation member (11) and the friction part (5).

2. The floating type brake pad according to claim 1, **characterized in that** the third relative gap (12) is larger than the second relative gap (10).

3. The floating type brake pad according to claim 1, **characterized in that**
the anti-rotation member (11) is an elastic element sleeved with a compression bushing (13) on an exterior thereof,
a compression gap is reserved between the anti-rotation member (11) and the compression bushing (13), and the compression bushing (13) is configured to exert a biasing force on the friction part (5) to prevent relative rotation between the friction part (5) and the brake pad backing plate (1), and
a fourth relative gap (14) smaller than the first relative gap (7) is present between the compression bushing (13) and the friction part (5).

4. The floating type brake pad according to claim 3, **characterized in that** the fourth relative gap (14) is larger than the second relative gap (10).

5. The floating type brake pad according to claim 3 or 4, **characterized in that** the compression bushing (13) has a hardness value less than that of the anti-rotation member (11).

6. The floating type brake pad according to any one of claims 1-5, **characterized in that** the anti-rotation member (11) has a hardness value greater than that of the elastic supporting member (9).

7. The floating type brake pad according to any one of claims 1-6, **characterized in that**
the positioning part (6) has a cylindrical structure extending from the friction part (5) into the positioning hole (3), and
the positioning hole (3) is a circular through hole matching a shape of the positioning part (6).

8. The floating type brake pad according to claim 7, **characterized in that** the positioning part (6) comprises an annular groove (15) in an end portion thereof on a side towards the brake pad backing plate (1), and the connection member (8) is a clamp spring which is snap-fitted in the annular groove (15) and abuts against a receiving groove in a back face of the brake pad backing plate (1) opposite to the friction body (4).

9. The floating type brake pad according to any one of claims 1-8, **characterized in that**
the friction body (4) comprises a spherical supporting part (16) arranged on a side towards the brake pad backing plate (1), and
the elastic supporting member (9) has a sheet structure that is connected to and cooperating with the spherical supporting part (16).

## Patentansprüche

1. Schwimmend gelagerter Bremsklotz, umfassend:
eine Bremsklotz-Grundplatte (1), die mit einer versenkten Fläche (2) und einem Positionierungsloch (3) ausgebildet ist;
einen Reibungskörper (4), der ein Reibungsteil (5) und ein Positionierungsteil (6) umfasst, das in das Positionierungsloch (3) eingesetzt ist, wobei ein erster relativer Spalt (7) zwischen dem Positionierungsteil (6) und dem Positionierungsloch (3) vorhanden ist;
ein Verbindungselement (8), das jeweils mit dem Reibungskörper (4) und der Bremsklotz-Grundplatte (1) verbunden ist, so dass der Reibungskörper (4) auf der Bremsklotz-Grundplatte (1) mit einem bestimmten schwimmfähigen Betrag angeordnet ist; und
ein elastisches Stützelement (9), das innerhalb der versenkten Fläche (2) angebracht ist, mit dem Reibungskörper (4) verbunden ist und mit einem Führungsloch versehen ist, das angepasst ist, um dem Positionierungsteil (6) zu ermöglichen hindurchzugehen,
wobei eine äußere Konturkante des elastischen Stützelements (9) an einer inneren Seitenwand der versenkten Fläche (2) anliegt, oder ein zweiter relativer Spalt (10), der kleiner als der erste relative Spalt (7) ist, zwischen der äußeren Konturkante des elastischen Stützelements (9) und der inneren Seitenwand der versenkten Fläche (2) vorhanden ist,
die Bremsklotz-Grundplatte (1) mit einem Verdrehsicherungselement (11) zur Begrenzung des Reibungskörpers (4) in einer Rotationsrichtung desselben versehen ist,
**dadurch gekennzeichnet, dass**
ein dritter relativer Spalt (12), der kleiner als der erste relative Spalt (7) ist, zwischen dem Verdrehsicherungselement (11) und dem Reibungsteil (5) vorhanden ist.

2. Schwimmend gelagerter Bremsklotz nach Anspruch 1, **dadurch gekennzeichnet, dass** der dritte relative Spalt (12) größer als der zweite relative Spalt (10) ist.

3. Schwimmend gelagerter Bremsklotz nach Anspruch 1, **dadurch gekennzeichnet, dass** das Verdrehsicherungselement (11) ein elastisches Element ist, das an einer Außenseite mit einer Kompressionsbuchse (13) versehen ist,
ein Kompressionsspalt zwischen dem Verdrehsicherungselement (11) und der Kompressionsbuchse (13) reserviert ist, und die Kompressionsbuchse (13) so konfiguriert ist, dass sie eine Vorspannkraft auf das Reibungsteil (5) ausübt, um eine relative Drehung zwischen dem Reibungsteil (5) und der Bremsklotz-Grundplatte (1) zu verhindern, und
ein vierter relativer Spalt (14), der kleiner als der erste relative Spalt (7) ist, zwischen der Kompressionsbuchse (13) und dem Reibungsteil (5) vorhanden ist.

4. Schwimmend gelagerter Bremsklotz nach Anspruch 3, **dadurch gekennzeichnet, dass** der vierte relative Spalt (14) größer als der zweite relative Spalt (10) ist.

5. Schwimmend gelagerter Bremsklotz nach Anspruch 3 oder 4, **dadurch gekennzeichnet, dass** die Kompressionsbuchse (13) einen geringeren Härtewert als das Verdrehsicherungselement (11) aufweist.

6. Schwimmend gelagerter Bremsklotz nach einem der Ansprüche 1 bis 5, **dadurch gekennzeichnet, dass** das Verdrehsicherungselement (11) einen größeren Härtewert als das elastische Stützelement (9) aufweist.

7. Schwimmend gelagerter Bremsklotz nach einem der Ansprüche 1 bis 6, **dadurch gekennzeichnet, dass**
das Positionierungsteil (6) eine zylindrische Struktur aufweist, die sich von dem Reibungsteil (5) in das Positionierungsloch (3) erstreckt, und
das Positionierungsloch (3) ein kreisförmiges Durchgangsloch ist, das einer Form des Positionierungsteils (6) entspricht.

8. Schwimmend gelagerter Bremsklotz nach Anspruch 7, **dadurch gekennzeichnet, dass** das Positionierungsteil (6) eine ringförmige Nut (15) in einem Endabschnitt davon auf einer Seite in Richtung der Bremsklotz-Grundplatte (1) umfasst, und das Verbindungselement (8) eine Klemmfeder ist, die in die ringförmige Nut (15) eingerastet ist und gegen eine Aufnahmenut in einer Rückseite der Bremsklotz-Grundplatte (1) gegenüber dem Reibungskörper (4) anliegt.

9. Schwimmend gelagerter Bremsklotz nach einem der Ansprüche 1 bis 8, **dadurch gekennzeichnet, dass**
der Reibungskörper (4) ein kugelförmiges Stützteil (16) aufweist, das auf einer der Bremsklotz-Grundplatte (1) zugewandten Seite angeordnet ist, und
das elastische Stützelement (9) eine Blattstruktur aufweist, die mit dem kugelförmigen Stützteil (16) verbunden ist und mit diesem zusammenwirkt.

## Revendications

1. Plaquette de frein de type flottant, comprenant :
une plaque d'appui de plaquette de frein (1), formée avec une face fraisée (2) et un trou de positionnement (3) ;
un corps de frottement (4), comprenant une partie de frottement (5) et une partie de positionnement (6) insérée dans le trou de positionnement (3), un premier espace relatif (7) étant présent entre la partie de positionnement (6) et le trou de positionnement (3) ;
un élément de raccord (8), respectivement raccordé au corps de frottement (4) et à la plaque d'appui de plaquette de frein (1) de sorte que le corps de frottement (4) soit agencé sur la plaque d'appui de plaquette de frein (1) avec une certaine quantité flottante ; et
un élément de support élastique (9), monté à l'intérieur de la face fraisée (2), raccordé au corps de frottement (4), et doté d'un trou de guidage adapté pour permettre à la partie de positionnement (6) de passer à travers,
un bord de contour externe de l'élément de support élastique (9) venant en butée contre une paroi latérale interne de la face fraisée (2), ou un deuxième espace relatif (10) plus petit que le premier espace relatif (7) étant présent entre le bord de contour externe de l'élément de support élastique (9) et la paroi latérale interne de la face fraisée (2),
la plaque d'appui de plaquette de frein (1) étant dotée d'un élément anti-rotation (11) destiné à limiter le corps de frottement (4) dans une direction de rotation de celui-ci,
**caractérisée en ce que**,
un troisième espace relatif (12) plus petit que le premier espace relatif (7) est présent entre l'élément anti-rotation (11) et la partie de frottement (5).

2. Plaquette de frein de type flottant selon la revendication 1, **caractérisée en ce que** le troisième espace relatif (12) est plus grand que le deuxième espace relatif (10).

3. Plaquette de frein de type flottant selon la revendication 1, **caractérisée en ce que**
l'élément anti-rotation (11) est un élément élastique gainé d'une douille de compression (13) sur un extérieur de celui-ci,
un espace de compression est réservé entre l'élément anti-rotation (11) et la douille de compression (13), et la douille de compression (13) est conçue pour exercer une force de sollicitation sur la partie de frottement (5) pour empêcher une rotation relative entre la partie de frottement (5) et la plaque d'appui de plaquette de frein (1), et
un quatrième espace relatif (14) plus petit que le premier espace relatif (7) est présent entre la douille de compression (13) et la partie de frottement (5).

4. Plaquette de frein de type flottant selon la revendication 3, **caractérisée en ce que** le quatrième espace relatif (14) est plus grand que le deuxième espace relatif (10).

5. Plaquette de frein de type flottant selon la revendication 3 ou 4, **caractérisée en ce que** la douille de compression (13) possède une valeur de dureté inférieure à celle de l'élément anti-rotation (11).

6. Plaquette de frein de type flottant selon l'une quelconque des revendications 1 à 5, **caractérisée en ce que** l'élément anti-rotation (11) possède une valeur de dureté supérieure à celle de l'élément de support élastique (9).

7. Plaquette de frein de type flottant selon l'une quelconque des revendications 1 à 6, **caractérisée en ce que**
la partie de positionnement (6) possède une structure cylindrique s'étendant à partir de la partie de frottement (5) dans le trou de positionnement (3), et
le trou de positionnement (3) est un trou traversant circulaire correspondant à une forme de
la partie de positionnement (6).

8. Plaquette de frein de type flottant selon la revendication 7, **caractérisée en ce que** la partie de positionnement (6) comprend une rainure annulaire (15) dans une partie d'extrémité de celle-ci sur un côté vers la plaque d'appui de plaquette de frein (1), et l'élément de raccord (8) est un ressort de serrage qui est encliqueté dans la rainure annulaire (15) et vient en butée contre une rainure de réception dans une face arrière de la plaque d'appui de plaquette de frein (1) opposée au corps de frottement (4).

9. Plaquette de frein de type flottant selon l'une quelconque des revendications 1 à 8, **caractérisée en ce que**
le corps de frottement (4) comprend une partie de support sphérique (16) agencée sur un côté vers la plaque d'appui de plaquette de frein (1), et
l'élément de support élastique (9) possède une structure en feuille qui est raccordée à la partie de support sphérique (16) et qui coopère avec celle-ci.
